(19) Europäisches Patentamt
European Patent Office
Office européen des brevets

(11) Publication number: **0 323 428 B1**

(12) **EUROPEAN PATENT SPECIFICATION**

(45) Date of publication of patent specification: **02.11.94**

(51) Int. Cl.5: **C08F 279/02**, //(C08F279/02, 212:08)

(21) Application number: **88870194.3**

(22) Date of filing: **22.12.88**

# (54) Continuous process including recycle stream treatment for the production of high impact polystyrene.

(30) Priority: **24.12.87 US 137743**
**24.12.87 US 137889**
**24.12.87 US 138089**

(43) Date of publication of application:
**05.07.89 Bulletin 89/27**

(45) Publication of the grant of the patent:
**02.11.94 Bulletin 94/44**

(84) Designated Contracting States:
**BE DE FR GB IT NL**

(56) References cited:
**EP-A- 0 113 066**
**EP-A- 0 113 067**
**EP-A- 0 143 500**
**US-A- 3 981 944**

(73) Proprietor: **FINA TECHNOLOGY, INC.**
**8350 North Central Expressway**
**Dallas, Texas 75206 (US)**

(72) Inventor: **Sosa, José M.**
**P.O Box 1311**
**Big Spring Texas 79721 (US)**
Inventor: **Morris, Jeffrey**
**1100 Berkshire Court**
**Roanoke Texas 76262 (US)**

(74) Representative: **Detrait, Jean-Claude**
**c/o Fina Research S.A.**
**Patent Department**
**Zone Industrielle C**
**B-7181 Feluy (BE)**

EP 0 323 428 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

The present invention relates to a process for producing high impact polystyrene. More particularly, the invention relates to a continuous flow process for producing polystyrene having discrete particles of rubber included therein.

### BACKGROUND OF THE INVENTION

It is well known that rubber-reinforced polymers of monovinylidene aromatic compounds, such as styrene, alpha-methyl-styrene and ring-substituted styrene, are useful for a variety of purposes. For example, rubber-reinforced styrene polymers having discrete particles of a cross-linked rubber, e.g., polybutadiene, dispersed throughout the styrene polymer matrix can be used in a variety of diverse applications including refrigerator linings, packaging applications, furniture, household appliances and toys. Such rubber-reinforced polymers are commonly referred to as "high impact polystyrene" or "HIPS".

One known process for producing HIPS polymers is the batch or suspension process wherein polymerization occurs within a single reaction vessel. An advantage of the batch process is the ease with which HIPS production can be controlled and monitored due to the use of a single reaction vessel throughout the entire polymerization process. However, the batch process suffers from a number of inherent disadvantages, such as low yields and extended down-time periods, which render it unsuitable for commercial purposes.

In order to overcome the commercial difficulties of the batch process, several continuous flow processes for the production of HIPS have been proposed. Such known processes employ a plurality of serially arranged reaction vessels herein the degree of polymerization increases from one vessel to the next. See, for example, U.S. Patent 3,658,946 to Bronstert et al., U.S. Patent 3, 243,481 to Ruffing et al., U.S. Patent 4,451,612 to Wang et al., and U.S. Patent 4,567,232 to Echte et al.

Several of these continuous process patents generally suggest that some type of devolatilization zone and recycle pathway be used for returning solvents and unreacted monomer to one of the polymerization reaction zones. However, the recycle stream leaving the devolatilization zone contains a substantial amount of impurities, including residual antioxidants and antioxidant decomposition by-products, and/or free radical initiator decomposition by-products, which can adversely affect the continuous HIPS production process when the impurities are introduced into a polymerization zone. In fact, these impurities can destroy the effectiveness of a free radical initiator and inhibit polymerization for a significant period of time, even indefinitely, when the recycle stream is fed into the initial polymerization reaction zone. Further, such impurities can impart undesirable physical characteristics, such as discoloration, to the HIPS polymers.

None of the above patents recognize either the cause or the effects of recycle stream impurities. Similarly, none of those patents provides any means for overcoming the adverse effects of these impurities in the recycle stream upon a continuous flow process for producing HIPS polymers.

### SUMMARY OF THE INVENTION

The present invention overcomes the disadvantages of known continuous HIPS production processes. In particular, the present invention provides a continuous flow process wherein specific types of free radical initiators are used to optimize polymerization, specific types of antioxidants are utilized to prevent undesirable oxidation of the rubber and styrene, and specific types of polymerization inhibiting impurities are removed from a recycle stream prior to feeding or introducing the recycle stream into a polymerization zone. In a preferred embodiment, the inventive process further comprises the step of monitoring the acidity of the recycle stream. In another preferred embodiment, non-volatile antioxidants are utilized which do not decompose to form by-products which are volatile at the temperatures at which the inventive process operates.

According to the present invention, there is provided a continuous process for producing high impact polystyrene, comprising :

- forming a mixture comprising at least one vinylaromatic monomer, a rubber, a non-volatile antioxidant and a free-radical initiator;
- polymerizing said mixture in at least one polymerization reactor;
- feeding said mixture to a pre-heater to heat said mixture and produce a heated mixture;

- feeding said heated mixture to a devolatizer to remove volatile components from said heated mixture thereby producing high impact polystyrene; and
- feeding said volatile components as a recycle stream to at least one polymerization reactor;

and wherein the process is further characterised by one or more of :

(i) selecting said non-volatile antioxidant to exhibit a weight loss at 250°C under nitrogen at 1 atmosphere pressure of less than 1%;

(ii) selecting said free-radical initiator to decompose to form at least one initiating radical and substantially only non-acidic decomposition by-products comprised in the volatile components removed in the devolatilizer, wherein introduction of said non-acidic decomposition by-products in the recycle stream into the first reactor does not inhibit polymerization of said vinyl-aromatic monomer, and wherein a reaction between said non-acidic decomposition by-products and said free radical initiator in said first reactor does not inhibit polymerization of said vinylaromatic monomer;

(iii) removing initiator-inhibiting impurities from said recycle stream to produce a treated recycle stream containing less than 0.08% by weight acid components, and feeding said treated recycle stream to said at least one polymerization reactor.

In an additional embodiment, free radical initiators are used which decompose only into non-acid by-products.

## BRIEF DESCRIPTION OF THE DRAWINGS

Other objects and further features of the present invention will be better understood when considered in conjunction with the accompanying drawings, wherein like numerals denote corresponding parts, and wherein:

Figure 1 is a schematic representation of reaction vessels and apparatus useful in the process of the present invention.

Figure 2 is a schematic representation of another embodiment of reaction vessels and apparatus useful in the process of the present invention.

Figure 3 is a graph showing the effect of benzoic acid on the polymerization of styrene in the presence of a free radical initiator.

Figure 4 is a thermogravimetric analysis of exemplary antioxidants.

## DETAILED DESCRIPTION OF THE INVENTION

Referring now to Figures 1 and 2, there is shown a schematic representation of a series of reaction vessels and apparatus useful in the practice of the continuous HIPS production process of the present invention.

Styrene, polybutadiene, a free radical initiator, an antioxidant, and additional components such as solvents and other additives are fed to a polymerization reactor 10 through a feed line or lines generally indicated at 15. The antioxidant may alternatively be introduced at other points in the system. As used herein, the term "styrene" includes a variety of substituted styrenes, e.g., alpha-methyl styrene, ring-substituted styrenes such as p-methylstyrene and p-chlorostyrene, as well as unsubstituted styrene. Typically, the mixture in polymerization reactor 10 will comprise about 75 to 99% by weight styrene, about 1 to 25% by weight polybutadiene, about 0.001 to 0.2% by weight, based on the total content of the polymer system, of free radical initiator, and about 0.05 to 0.15% by weight, based on the total content of the polymer system, of antioxidant.

Polymerization reactor 10 is preferably a continuously stirred tank reactor which operates at a percent solids level above the inversion point of the polymer system. That is, the polymerization reactor 10 operates at a percent solids level such that the system has a continuous phase of polystyrene and a discontinuous phase of dispersed droplets of rubber, or preferably, the droplets are a mixture of polystyrene and rubber. Reactor 10 is preferably maintained at a temperature of 120° to 135°C, and a pressure of about 50 kPa

The apparatus used in practicing the present invention may also comprise an additional polymerization reactor 11 which is operated at pre-inversion conditions, i.e., the continuous phase therein is a styrene-rubber solution and the discontinuous phase is polystyrene. This pre-inversion reactor 11 is located directly before the polymerization reactor 10, such that the styrene, polybutadiene, free radical initiator, antioxidant, and other components are fed to the pre-inversion reactor 11 and the mixture exiting the pre-inversion reactor is then fed to polymerization reactor 10. The pre-inversion reactor is preferably a continously stirred tank reactor. The antioxidant is preferably added to the system after the pre-inversion reactor, for instance in a line or flow reactor as described hereafter.

Output from the polymerization reactor 10 is fed to another polymerization reactor through line 25 and post-inversion stage polymerization occurs in this next polymerization reactor. Preferably, this next polymerization reactor is a linear-flow reactor, such as a plug flow reactor, but may also be a tower-type reactor or other known reactor design. Fig. 1 shows a single linear-flow reactor 20; Fig. 2 shows two linear-flow reactors 21 and 22; and more linear-flow reactors may be serially connected with increased polymerization occurring in each subsequent reactor. The temperature and pressure of the flow are gradually increased as it passes through the linear-flow reactors. Output from polymerization reactor(s) 20 (21, 22) which is preferably at a temperature of about 155° to 165°C and a pressure less than about 275 kPa, is directed to a pre-heater 30 and then to a conventional devolatilizer 40 where the temperature rises to about 235°C at a vacuum of about 1.3-5.3 kPa, through lines 35 and 45 respectively. The resultant HIPS polymer is removed from devolatilizer 40 through line 55 and directed to a conventional pelletizer (not shown) or the like. The HIPS polymer thus produced has a notched Izod value of 100 to 160 N.m/m, a Gardner falling dart value of 9 to 18 N.m, and a tensile strength of 18 to 31 MPa. These HIPS polymers have excellent color and gloss and are suitable for many applications.

Unreacted styrene monomer and other volatile residual components leave devolatilizer 40 through line 65 as a recycle stream. It is preferably returned to the system after condensation in condenser means 66, storage and treatment in tank 67 and treatment in recycle treatment means 50, at a polymerization reactor 10 through line 75, as shown in Fig. 1. As shown in Fig. 2, besides being returned to the system at polymerization reactor 10 through line 77, it may alternatively be returned to the system at pre-inversion reactor 11 or at linear-flow reactor 21 through line 76 or 78, respectively. The recycle stream contains a variety of impurities. The major impurities in the recycle stream can be traced to products of reactions between species necessarily present in the recycle stream, such as styrene monomer and antioxidant, impurities from the rubber, and unwanted species in the system, such as oxygen. Although some of the recycle stream impurities are innocuous, it has been unexpectedly discovered that certain impurities in the recycle stream adversely affect the polymerization process or the resultant HIPS product when the recycle stream is introduced into the system.

In the continuous process of the present invention, polymerization of the styrene monomer is initiated by the decomposition of a free radical initiator. Initiating radicals for the polymerization reaction are generated by the decomposition of the free radical initiator into one or more primary radicals. The primary radical then reacts with styrene monomer to initiate polymerization.

Typically, the free radical initiator is fed to the first polymerization reactor 10, which is maintained at conditions under which the free radical initiator decomposes, although it may also be fed to pre-inversion reactor 11 or linear-flow reactor 21. The free radical initiator may alternatively be selected such that it will not decompose in the first polymerization reactor 10 and instead will decompose under the conditions maintained in a subsequent polymerization reactor. In this case, polymerization of styrene monomer in polymerization reactor 10 could be thermally initiated. Alternatively, a combination of two or more free radical initiators could be used, such that one free radical initiator decomposes in the polymerization reactor 10 and another free radical initiator decomposes in the linear-flow reactor 20 (21, 22).

Decomposition of the free radical initiator, which initiates polymerization of the styrene monomer, also produces decomposition by-products which do not participate in the polymerization reaction. In the present continuous flow process, these decomposition by-products of the free radical initiator are removed from the HIPS polymer in the devolatilizer 40 and appear in the recycle stream.

After investigating the effects of various recycle stream components upon styrene polymerization, it has been discovered that acid decomposition by-products of free radical initiators react with such initiators, thereby inhibiting styrene polymerization. It is belived that these acidic decomposition by-products adversely affect free radcial initiator efficiency by inducing decomposition of the free radical initiator and/or trapping free radicals produced by spontaneous, as opposed to induced, decomposition of the free radical initiator. Thus, the acidic decomposition by-products decrease the number of free radicals available to initiate polymerization of the styrene monomer and decrease the efficiency of the free radical initiator.

Benzoic acid is one example of an acid decomposition by-product having such an adverse effect. The recognization that benzoic acid in the recycle stream inhibits styrene polymerization in the presence of a free radical initiator is particularly significant because benzoic acid is a decomposition by-product of t-butyl peroxybenzoate and dibenzoyl peroxide, two of the most commonly used free radical initiators in the continuous process production of HIPS. Benzoic acid is also produced from the air oxidation of benzaldehyde, which in turn is produced from the oxidation of styrene. Other acidic species may be present in the polybutadiene rubber. It is well known that phenolic anti-oxidants, sulfur components and substituted phosphites are added to protect the rubber from oxidation.

Examples of acid-producing free radical initiators and their corresponding acid decomposition by-products are set forth in Table 1. Those examples show that peroxy free radical initiators are a useful class of initiators for such processes, but that acidic decomposition by-products of such peroxy free radical initiators produce undesirable effects which the present invention is intended to alleviate. Applicants' recognition of such acidic by-products as a source of a problem in the manufacture of HIPS products is a significant aspect of the present invention.

TABLE 1

| | |
|---|---|
| Dilauroyl peroxide | Lauroyl acid |
| Dioctanoyl peroxide | Caprylic acid |
| Didecanoyl peroxide | n-Decanoic acid |
| Di-n-propionyl peroxide | Propionic acid |
| Bis(3,5,5-trimethyl hexanoyl) peroxide | 3,5,5-Trimethyl hexanoic acid |
| Dibenzoyl peroxide | Benzoic acid |
| Bis(2,4-dichlorobenzoyl) peroxide | 2,4 Dichlorobenzoic acid |
| Bis(o-methylbenzoyl) peroxide | o-Methyl benzoic acid |
| Acetyl cyclohexane sulphonyl peroxide | Cyclohexane sulphonic acid |
| t-Butylperoxypivalate | Pivalic acid |
| t-Butyl peroxy-2-ethylhexanoate | 2-Ethyl caproic acid |
| t-Butyl peroxy isobutyrate | Isobutyric acid |
| t-Butyl peroxybenzoate | Benzoic acid |

All of the above-listed acid decomposition by-products are believed to have a detrimental effect on the efficiency of free radical initiation of styrene polymerization.

Fig. 3 graphically illustrates the unexpectedly detrimental effects of benzoic acid upon styrene polymerization in the presence of the free radical initiator t-butylperoxy-benzoate. This inhibitory effect of benzoic acid is a decomposition by-product of t-butylperoxybenzoate and dibenzoyl peroxide, initiators which have long been widely used in catalyzing styrene polymerization reactions. Table 2 below lists the inhibition time and percent polymerization after specified time intervals at varying ratios of t-butylperoxybenzoate (TBP) to benzoic acid, which is graphically presented in Fig. 3.

TABLE 2

| POLYMERIZATION OF STYRENE IN PRESENCE OF TBP AND BENZOIC ACID AT 120 °C UNDER $N_2$ | | | | | | | | |
|---|---|---|---|---|---|---|---|---|
| Ratio of TBP:Acid | % Polymer at (min) | | | | | | | (min) Inhib. Time |
| | 0 | 10 | 20 | 30 | 40 | 50 | 60 | |
| 1:0 | 0 | 1.0 | 3.4 | 4.7 | 6.7 | 8.2 | 9.9 | 7.5 |
| 1:1 | 0 | 0.84 | 2.4 | 3.9 | 4.9 | 6.6 | 7.5 | 7.0 |
| 1:2 | 0 | 0.21 | 2.0 | 3.8 | 5.0 | 6.4 | 6.8 | 13.0 |
| 1:4 | 0 | 0.42 | 2.2 | 4.2 | 4.4 | 7.5 | 8.8 | 11.0 |

As clearly indicated in Table 2 and Fig. 3, the polymerization inhibition time at TBP:Acid ratios of 1:1 and 1:0 is significantly less than at ratios of 1:2 and 1:4. Initially, the benzoic acid apparently contributes to an inhibition process (see the amount of polymer formed after 10 minutes). After the inhibition or retardation effect is overcome, the polymerization reaction proceeds normally. However, in a stream with continuous recycle, the inhibitory effect would constantly be present as fresh recycle stream is continuously fed to the polymerization reactor.

A reduction in inhibition time has a marked effect upon the overall continuous HIPS production process. A reduction in inhibition time advantageously results in increased free radical initiator efficiency, decreased residence time in the initial polymerization zone and an increased production rate without the necessity of providing additional equipment.

According to the process of the present invention, the adverse effects of acid decomposition by-products of free radical initiators, such as t-butylperoxybenzoate, dibenzoyl-peroxide and the free radical initiators listed in Table 1, are avoided by directing the recycle stream to a recycle treatment vessel 50

interposed between devolatilizer 40 and recycle stream feed line 75. Recycle treatment vessel 50 comprises at least one adsorbent material, such as alumina or clay, which is capable of removing acid components from the recycle stream. Examples of specific adsorbent materials include alumina, attapulgus clay, carbon, silica gels and Porocel™ (an alumina). The size and shape of the recycle treatment vessel are determined according to standard engineering practices. Preferred is a clay tower, maintained at 80-120°C and 138-172 kPa pressure.

While the recycle treatment vessel must be capable of removing substantially all of the acid components from the recycle stream, it is highly desirable that the adsorbent used also be capable of removing other impurities, both identified and unknown, from the recycle stream. The combined effects of all impurities, including acid decomposition by-products, upon styrene polymerization reaction rate and upon the average rubber particle size in the resultant HIPS polymer are significantly detrimental, and increase with an increase in the amount of impurities.

According to another preferred embodiment of the present invention, the continuous process for the production of HIPS further includes the step of monitoring the acidity and/or purity of the treated recycle stream prior to feeding the treated recycle stream back into the polymerization stream. The acidity of the treated recycle stream should be monitored to ensure that the recycle treatment vessel is effectively eliminating acid components from the recycle stream. The acidity of the treated recycle stream is considered adequately controlled when the treated recycle stream contains less than 0.08% acid components. Preferably, the treated recycle stream contains less than 0.03% acid components, and most preferably less than 0.01%. The recycle treatment vessel should be readjusted after a period of use, either regularly or based on results of monitoring recycle stream purity. For instance, clay adsorbent in a clay tower should be replaced when recycle stream purity diminishes.

Several means for monitoring the acidity and/or purity of the treated recycle stream can be used in accordance with the presently claimed invention. Three preferred monitoring procedures are: a water wash pH test, a recycle purity test and a total acid number test.

The water wash pH test comprises the steps of pouring equal amounts of distilled or deionized water and a sample of the treated recycle into a separatory funnel; shaking the separatory funnel for at least 15 seconds; allowing the phases in the separatory funnel to separate for about five minutes, draining the lower water layer from the separatory funnel into a beaker; and then determining the pH of the water using a conventional pH meter. If the pH of the water is less that 6.5, the treated recycle stream has an unacceptably high acid content and the adsorbent in the recycle stream vessel should be replaced to ensure that the treated recycle stream does not have any adverse effects upon the polymerization of styrene in the polymerization system. Preferably, the pH of the water should be 6.8 to 7.0.

The recycle purity test detects the presence of phenolic compounds which react with peroxides to give colored compounds that are potent inhibitors. It is conducted as follows. A clay treated styrene is prepared by filling a separatory funnel with clay, filling the funnel with styrene, allowing the styrene and clay to stand for about five minutes, draining the separatory funnel slowly, and filtering the styrene to remove clay fines. To conduct the recycle purity test, a blank containing about 40 ml of clay treated styrene and four drops of t-butylperoxy-benzoate and a sample containing 40 ml of the treated recyle stream and four drops of t-butylperoxybenzoate are prepared. The blank and the sample are heated in an oven at a temperature of 130-135°C for about ten minutes. The blank and the sample are visually inspected to determine the presence or absence of a yellow color. Next, the percent transmittance of the sample is determined using a spectrophotometer. The wave length of the spectrophotometer is set to 400 nm and 0% transmittance without a cell in the instrument. The blank is inserted into the spectrophotometer and the transmittance is set to 100%. Next, the sample is inserted into the spectrophotometer and the percent transmittance of the sample is determined. A clean treated recycle stream will be water-white, i.e., no evidence of yellow color, and the percent transmittance will be greater than 95%.

The most preferred method for monitoring the acid content of the treated recycle stream is the total acid number test. The total acid number test is adapted from ASTM D 974-80 and comprises the following steps. A titration solvent is prepared by adding 500 ml of toluene and 5 ml deionized water to 495 ml of anhydrous isopropyl alcohol. A p-naphtholbenzein indicator solution is prepared by dissolving 1.0 gram of p-naphtholbenzein in 100 ml of the titration solvent. To perform the sample titration, about 20 grams of the treated recycle stream, 100 ml of the titration solvent and 10 drops of the indicator solution are introduced as a sample solution into a suitable container such as a flask. This sample solution is swirled, without stoppering, until the sample is entirely dissolved by the solvent. The sample solution is then titrated immediately at a temperature below 30°C by adding 0.01N alcoholic KOH solution in increments and swirling to disperse the KOH as necessary. The titration is continued until the orange color of the sample solution changes to a green or green-brown color. The end point of the titration is considered definite if the

color change persists for 15 seconds. The quantity of 0.01N alcohol KOH required to reach the end point is recorded. A blank titration on 100 ml of the titration solvent and 10 drops of the indicator solution is performed by incrementally adding 0.01 N alcoholic KOH solution until the orange to green or green-brown color change occurs, indicating the end point. The quantity of 0.01 N alcoholic KOH required to reach the end point of the blank titration is recorded. The total acid number (T), expressed as mg of KOH/g, of the treated recycle stream, is calculated by the formula: $T = ((A-B)N \times 56.1)/W$, wherein A is the number of ml of KOH solution required for titration of the sample solution, B is the number of ml of KOH solution required for titration of the blank, N is the normality of the KOH solution, and W is the weight of the sample used. The treated recycle stream is considered to be clean or to have a sufficiently low acid content if the total acid number is 0.08 or lower. Preferably, the total acid number should be less than 0.03, more preferably less than 0.01.

According to a further aspect of the process of the present invention, the adverse effects of acid decomposition by-products of free radical initiators, such as t-butylperoxybenzoate, dibenzoyl-peroxide and the free radical initiators listed in Table 1, are avoided by careful selection of the free radical initiator. The choice of free radical initiator is an important aspect of the present invention. Suitable free radical initiators are those which do not form acid by-products upon decomposition. The useful free radical initiators decompose to form innocuous decomposition by-products which do not react with the free radical initiator or other components of the polymerization system, such as anti-oxidant or styrene monomer, to inhibit the styrene polymerization reaction. Since the decomposition by-products are recycled to polymerization zones in the system, the decomposition by-products must not react with the free radical initiator so as to deactivate the free radical initiator and must not function as chain terminators for the styrene polymerization reaction.

Examples of free radical initiators useful in the present process include azo-compounds such as 2,2'-azo-bis-iso-butyronitrile and 2,2'-azo-bis(2,4-dimethyl valeronitrile); and peroxy compounds such as peroxydicarbonates such as di(n-propyl)peroxydicarbonate; di(sec-butyl)peroxydicarbonate; di(2-ethylhexyl)-peroxydicarbonate; dialkyl peroxides such as dicumyl peroxide; 2,5-dimethyl-2,5-di(t-butylperoxy)hexane; t-butyl cumyl peroxide; - -bis(t-butyl peroxy)diisopropylbenzene; di-t-butyl peroxide; 2,5-dimethyl-2,5-di(t-butylperoxy)hexyne-3; hydroperoxides such as 2,5-dihydroperoxy-2,5-dimethylhexane; cumene hydroperoxide; t-butyl hydroperoxide; t-amyl hydroperoxide; peroxyketals such as n-butyl-4, 4-bis(t-butylperoxy)-valerate; 1,1-di(t-butylperoxy)-3,3,5-trimethyl cyclohexane; 1,1-di(t-butylperoxy)cyclohexane; 1,1-di(t-amyl-peroxy)cyclohexane; 2,2-di(t-butylperoxy)butane; ethyl-3,3-di(t-butylperoxy)butyrate; t-butyl peroctoate and 1,1-di(t-butylperoxy) cyclohexane blend; 2,2-di(t-amyl-peroxy)propane; and ethyl-3,3-di(t-amylperoxy)-butyrate. Of these free radical initiators, the peroxy ketal compounds are preferred, particularly ethyl -3, 3-di(t-butyl-peroxy) butyrate and 1,1-di(t-butylperoxy)cyclohexane.

Of course, the specific free radical initiator or combination of initiators will be determined within the bounds of the invention by the desired process parameters such as rate of polymerization reaction, degree of polymerization, reactor temperatures, degree of grafting, and the like. The amount of free radical initiator to be used is from 10 to 2000 ppm, preferably 50 to 600 ppm, based on the total content of the polymer system in the first polymerization reactor.

It has also been discovered that volatile antioxidants and antioxidant decomposition by-products react with free radical polymerization initiators, thereby inhibiting styrene polymerization. It is believed that these volatile antioxidants and decomposition by-products adversely affect free radical initiator efficiency by trapping free radicals produced by decomposition of the free radical initiator.

Butylated hydroxy toluene (BHT) is one example of a volatile antioxidant having such an adverse effect. The recognization that BHT in the recycle stream inhibits styrene polymerization in the presence of a free radical initiator is particularly significant because BHT is one of the most commonly used antioxidants in the continuous process production of HIPS.

According to the process of the present invention, the adverse effects of volatile antioxidants, such as BHT, are avoided by careful selection of the antioxidant. Suitable antioxidants are those which are non-volatile at the temperatures and pressures, including the devolatilizer temperature, employed in the continuous process for producing HIPS. The useful antioxidants and their decomposition by-products are non-volatile and thus are removed from the system with the HIPS product. The non-volatile antioxidants and by-products do not become part of the recycle stream and the undesirable build-up of antioxidant in the polymer system is avoided. Since the antioxidant and by-products are not returned to the polymerization reactors in the recycle stream, residual antioxidant and by-products are not available to react with and deactivate the free radical initiator and do not function as chain terminators for the styrene polymerization reaction.

The specific non-volatile antioxidant will be determined by the desired process parameters such as rate of polymerization reaction, degree of polymerization, reactor temperatures, and degree of grafting. The amount of non-volatile antioxidant to be used is from 0.05 to 0.15% by weight based on the total content of the polymer system. The antioxidant must be non-volatile at temperatures of at least about 235 °C under vacuum of 10 to 40 mm Hg. The preferred amount is from 0.05 to 0.08 wt%.

To those skilled in the art, it will be apparent that the volatility of a chemical compound is a measure of its ability to sublime or vaporize at given temperatures and pressures. In general, highly polar, high molecular weight compounds will volatilize at higher temperatures. For instance, BHT, with a molecular weight of 220 and a melting point of about 69-70 °C will have a vapor pressure of about 8 kPa at 300 °C and about 75 kPa at 350 °C, whereas octadecyl-3,5-di-tert-butyl-4-hydroxyhydrocinnamate, with a molecular weight of about 531 and a melting point of about 49-54 °C, will have a vapor pressure of about 0.53 kPa at 250 °C and a vapor pressure of 4 kPa at 300 °C.

It is known to those skilled in the art to determine weight loss of an antioxidant to determine the amount of antioxidant which will remain in the final product as a function of temperature and pressure, as shown in Fig. 3, by measuring the percentage of a sample remaining as temperature is increased at a heating rate of 10 °C per minute in $N_2$ at atmospheric pressure. In Fig. 3, curve 80 represents BHT, curve 81 represents 2,2'-methylene-bis(4-methyl-6-tert-butylphenol) (MBMBP), curve 82 represents octadecyl-1,5-di-tert-butyl-4-hydroxy-hydrocinnamate, curve 83 represents 2,4-bis-(n-octylthio)-6-(4-hydroxy-3,5-di-tert-butylanilino)-1,3,5-triazine and curve 84 represents tetra-kis (methylene-3-(3,5-di-tert-hydroxyphenylpropionate)-methane).

In practicing the present invention, volatility can be measured in terms of weight loss in the same manner. Preferred antioxidants will lose less than 1.0%, preferably less than 0.1%, of their weight at 250 °C in $N_2$ at 1 atm.(0.1 MPa)pressure. Selection of antioxidants for given applications depends on the process temperatures and pressures, as well as on other factors such as color, solubility, cost and availability. Those of skill in the art have available numerous compounds that can serve as antioxidants; see, for example, Goodyear Chemicals, Index of Commercial Antioxidants and Antiozonants, Third Edition, 1982. Those of ordinary skill in the art would be capable of selecting antioxidants on the basis of the above disclosure from among known antioxidants based upon the above-discussed volatility parameters without undue experimentation.

Examples of non-volatile antioxidants useful in the present process include octadecyl-3,5-di-tert-butyl-4-hydroxy-hydrocinnamate:

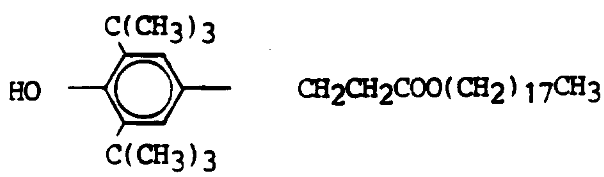

2,4-bis(n-octylthio)-6-(4-hydroxy-3,5-di-tert-butylanilino)-1,3,5-triazine:

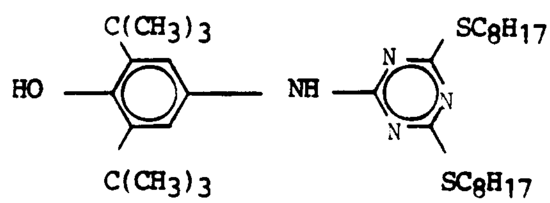

and triethylene glycol-bis(3-(3'-tert-butyl-4'-hydroxy-5'-methylphenyl)propionate):

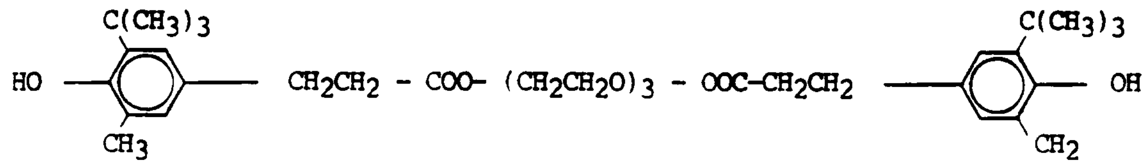

Although the invention has been described with reference to particular embodiments thereof, it will be apparent to those skilled in the art that various changes and modifications can be made without departing from the spirit of the invention or from the scope of the appended claims.

**Claims**

1. A continuous process for producing high impact polystyrene, comprising :
   - forming a mixture comprising at least one vinylaromatic monomer, a rubber, a non-volatile antioxidant and a free-radical initiator;
   - polymerizing said mixture in at least one polymerization reactor;
   - feeding said mixture to a pre-heater to heat said mixture and produce a heated mixture;
   - feeding said heated mixture to a devolatilizer to remove volatile components from said heated mixture thereby producing high impact polystyrene; and
   - feeding said volatile components as a recycle stream to at least one polymerization reactor;

   and wherein the process is further characterised by one or more of :

   (i) selecting said non-volatile antioxidant to exhibit a weight loss at 250 °C under nitrogen at 1 atmosphere pressure of less than 1%;

   (ii) selecting said free-radical initiator to decompose to form at least one initiating radical and substantially only non-acidic decomposition by-products comprised in the volatile components removed in the devolatilizer, wherein introduction of said non-acidic decomposition by-products in the recycle stream into the first reactor does not inhibit polymerization of said vinyl-aromatic monomer, and wherein a reaction between said non-acidic decomposition by-products and said free radical initiator in said first reactor does not inhibit polymerization of said vinylaromatic monomer;

   (iii) removing initiator-inhibiting impurities from said recycle stream to produce a treated recycle stream containing less than 0.08% by weight acid components, and feeding said treated recycle stream to said at least one polymerization reactor.

2. A process of claim 1, wherein said weight loss is less than 0.1%.

3. A process of claim 1, further comprising the steps of :
   - polymerizing said mixture of vinylaromatic monomer and rubber in a first polymerization reactor to a degree above an inversion point of said mixture; and
   - feeding said mixture into at least a second polymerization reactor to further polymerize said mixture prior to feeding said mixture to said pre-heater.

4. A process of claim 3, wherein said first polymerization reactor is a continuously stirred tank reactor.

5. A process of claim 4, wherein said second polymerization reactor is a linear-flow reactor.

6. A process of claim 5, further comprising the step of feeding said mixture to at least one additional linear-flow reactor prior to heating said mixture in said pre-heater.

7. A process of claim 1, wherein said non-volatile antioxidant is at least one member selected from the group consisting of 2,4-bis (n-octylthio)-6-(4-hydroxy-3,5-di-tert-butylanilino)-1,3,5-triazine and triethylene glycol-bis(3-(3'-tert-butyl-4'-hydroxy-5' -methylphenyl) propionate).

8. A process of claim 1, wherein said non-volatile antioxidant comprises octadecyl-3,5-di-tert-butyl-4-hydroxyhydro-cinnamate.

9. A process of claim 2, comprising :
   - forming said mixture in a first continuously stirred tank reactor;
   - polymerizing said first mixture in said first continuously stirred tank reactor to a point below an inversion point of the first mixture;
   - feeding said first mixture to a second continuously stirred tank reactor;
   - polymerizing said first mixture in said second continuously stirred tank reactor to a point above an inversion point of said first mixture;
   - feeding said first mixture to a series of at least two linear-flow reactors to further polymerize said first mixture and produce a second mixture, wherein the degree of polymerization of said first mixture increases in each of said linear-flow reactors; and
   - feeding said second mixture to said pre-heater.

10. A process of claim 9, wherein said first polymerization reactor is a continuously stirred tank reactor.

11. A process of claim 10, wherein said second polymerization reactor is a linear-flow reactor.

12. A process of claim 11, further comprising the step of feeding said mixture to at least one additional linear-flow reactor prior to heating said mixture in said pre-heater.

13. A process of claim 1, wherein said free radical initiator is added to said mixture in an amount of 10-2000 ppm based on a total content of said mixture.

14. A process of claim 13, wherein said amount is 50-600 ppm based on a total content of said mixture.

15. A process of claim 1, wherein said free radical initiator is an azo compound.

16. A process of claim 15, wherein said azo compound is at least one member selected from the group consisting of 2,2'-azo-bis-isobutyronitrile and 2,2'-azo-bis-(2,4-dimethyl valero-nitrile).

17. A process of claim 1, wherein said free radical initiator is a peroxy compound.

18. A process of claim 17, wherein said peroxy compound is at least one member selected from the group consisting of peroxydicarbonates, dialkyl peroxides, hydroperoxides and peroxyketals.

19. A process of claim 9, wherein said free radical initiator is at least one member selected from the group consisting of ethyl-3,3-di(t-butylperoxy)butyrate and 1,1-di(t-butylperoxy)cyclohexane.

20. A process of claim 1, comprising :
   - forming said mixture in a first continuously stirred tank reactor;
   - maintaining said first continuously stirred tank reactor at a temperature at which said free radical initiator decomposes, said free radical initiator decomposing to form at least one initiating radical and non-acidic decomposition by-products;
   - polymerizing said first mixture in said first continuously stirred tank reactor to a point below an inversion point of the first mixture, said polymerization being initiated by a reaction of said initiating radical with said vinyl aromatic monomer;
   - feeding said first mixture to a second continuously stirred tank reactor;
   - polymerizing said first mixture in said second continuously stirred tank reactor to a point above the inversion point of the first mixture to produce a second mixture;
   - feeding said second mixture to a series of at least two linear-flow reactors to further polymerize said second mixture and produce a third mixture, wherein the degree of polymerization of said second mixture increases in each of said linear-flow reactors; and
   - feeding said third mixture to said pre-heater.

21. A process of claim 1, wherein said treated recycle stream contains less than 40 ppm total impurities.

22. A process of claim 1, further comprising monitoring an acid content of said treated recycle stream.

**23.** A process of claim 22, wherein the acid content of the treated recycle stream in monitored by an acid number test.

**24.** A process of claim 23, wherein said recycle stream is maintained with an acid number less than about 0.08.

**25.** A process of claim 24, wherein said recycle stream is maintained with an acid number less than about 0.03.

**26.** A process of claim 25, wherein said recycle stream is maintained with an acid number less than about 0.01.

**27.** A process of claim 1, wherein said recycle stream contains less than 0.03% of said acid component by-products.

**28.** A process of claim 27, wherein said recycle stream contains less than 0.01% of said acid component by-products.

**29.** A process of claim 1, comprising :
- forming said mixture in a first continuously stirred tank reactor;
- polymerizing said first mixture in said first continuously stirred tank reactor to a point below an inversion point of the first mixture;
- feeding said first mixture to a second continuously stirred tank reactor;
- polymerizing said first-mixture in said second continuously stirred tank reactor to a point above the inversion point of the first mixture to produce a second mixture;
- feeding said second mixture to at least one linear-flow reactor to further polymerize said second mixture and produce a third mixture, wherein a degree of polymerization of said second mixture increases in each said linear-flow reactor;
- feeding said third mixture to said pre-heater;
- feeding said volatile components as a recycle stream to a recycle treatment vessel; and
- removing initiator inhibiting impurities from said recycle stream in said recycle treatment vessel.

**30.** A process of claim 29, wherein said at least one linear-flow reactor comprises a series of at least two linear-flow reactors.

**Patentansprüche**

**1.** Kontinuierliches Verfahren zur Herstellung von hochschlagfestem Polystyrol, das umfaßt:
- Herstellung einer Mischung, die mindestens ein vinylaromatisches Monomer, einen Kautschuk, ein nichtflüchtiges Antioxidans und einen Radikalstarter umfaßt;
- Polymerisation der Mischung in mindestens einem Polymerisationsreaktor;
- Einbringen der Mischung in einen Vorerhitzer, um die Mischung zu erwärmen und eine erwärmte Mischung herzustellen;
- Einbringen der erwärmten Mischung in eine Vorrichtung zur Entfernung flüchtiger Bestandteile, um flüchtige Komponenten aus der erwärmten Mischung zu entfernen, wobei hochschlagfestes Polystyrol hergestellt wird; und
- Einbringen der flüchtigen Komponenten als Kreislaufstrom in mindestens einen Polymerisationsreaktor;

und worin das Verfahren weiterhin durch einen oder mehrere der folgenden Verfahrensschritte gekennzeichnet ist:

(i) Auswahl des nichtflüchtigen Antioxidans, um unter Stickstoff bei 250 °C und einem Druck von 1 Atmosphäre einen Gewichtsverlust von weniger als 1% zu erhalten;

(ii) Auswahl des Radikalstarters, der beim Zerfall mindestens ein Startradikal und im wesentlichen nur nichtsaure Zerfallsnebenprodukte bildet, die in den flüchtigen Komponenten enthalten sind, die in der Vorrichtung zur Entfernung flüchtiger Bestandteile entfernt werden, wobei das Einbringen der im Kreislaufstrom enthaltenen nichtsauren Zerfallsnebenprodukte in den ersten Reaktor die Polymerisation des vinylaromatischen Monomers nicht verhindert, und wobei eine Reaktion zwischen den nicht-sauren Zerfallsnebenprodukten und dem Radikalstarter im ersten Reaktor die Polymerisation

des vinylaromatischen Monomers nicht verhindert;
(iii) Entfernen von den Starter hemmenden Verunreinigungen aus dem Kreislaufstrom, um einen gereinigten Kreislaufstrom herzustellen, der weniger als 0,08 Gew.-% Säurekomponenten enthält, und Einbringen des gereinigten Kreislaufstroms in den mindestens einen Polymerisationsreaktor.

**2.** Verfahren nach Anspruch 1, worin der Gewichtsverlust weniger als 0,1% beträgt.

**3.** Verfahren nach Anspruch 1, das weiterhin die Schritte umfaßt:
- Polymerisation der Mischung aus vinylaromatischem Monomer und Kautschuk in einem ersten Polymerisationsreaktor bis zu einem Grad oberhalb eines Inversionspunktes der Mischung; und
- Einbringen der Mischung in mindestens einen zweiten Polymerisationsreaktor, um die Mischung weiter zu polymerisieren, bevor die Mischung in den Vorerhitzer eingebracht wird.

**4.** Verfahren nach Anspruch 3, worin der erste Polymerisationsreaktor ein kontinuierlich gerührter Mischreaktor ist.

**5.** Verfahren nach Anspruch 4, worin der zweite Polymerisationsreaktor ein linearer Durchflußreaktor ist.

**6.** Verfahren nach Anspruch 5, das weiterhin den Schritt umfaßt, die Mischung in mindestens einen zusätzlichen linearen Durchflußreaktor einzubringen, bevor die Mischung im Vorerhitzer erwärmt wird.

**7.** Verfahren nach Anspruch 1, worin das nichtflüchtige Antioxidans mindestens eine Komponente ist, die aus der Gruppe ausgewählt wird, die aus 2,4-Bis(n-octylthio)-6-(4-hydroxy-3,5-di-tert-butylanilino)-1,3,5-triazin und Triethylenglykol-bis(3-(3'-tert-butyl-4'-hydroxy-5'-methylphenyl)propionat) besteht.

**8.** Verfahren nach Anspruch 1, worin das nichtflüchtige Antioxidans Octadecyl-3,5-di-tert-butyl-4-hydroxyhydrocinnamat umfaßt.

**9.** Verfahren nach Anspruch 2, das umfaßt:
- Herstellung der Mischung in einem ersten kontinuierlich gerührten Mischreaktor;
- Polymerisation der ersten Mischung im ersten kontinuierlich gerührten Mischreaktor bis zu einem Punkt unterhalb eines Inversionspunkts der ersten Mischung;
- Einbringen der ersten Mischung in einen zweiten kontinuierlich gerührten Mischreaktor;
- Polymerisation der ersten Mischung im zweiten kontinuierlich gerührten Mischreaktor bis zu einem Punkt oberhalb eines Inversionspunkts der ersten Mischung;
- Einbringen der ersten Mischung in eine Reihe von mindestens zwei linearen Durchflußreaktoren, um die erste Mischung weiter zu polymerisieren und eine zweite Mischung herzustellen, worin der Polymerisationsgrad der ersten Mischung in Jedem der linearen Durchflußreaktoren ansteigt; und
- Einbringen der zweiten Mischung in den Vorerhitzer.

**10.** Verfahren nach Anspruch 9, worin der erste Polymerisationsreaktor ein kontinuierlich gerührter Mischreaktor ist.

**11.** Verfahren nach Anspruch 10, worin der zweite Polymerisationsreaktor ein linearer Durchflußreaktor ist.

**12.** Verfahren nach Anspruch 11, das weiterhin den Schritt umfaßt, die Mischung in mindestens einen zusätzlichen linearen Durchflußreaktor einzubringen, bevor die Mischung im Vorerhitzer erwärmt wird.

**13.** Verfahren nach Anspruch 1, worin der Radikalstarter in einer auf einen Gesamtgehalt der Mischung bezogenen Menge von 10 bis 2000 ppm zu der Mischung gegeben wird.

**14.** Verfahren nach Anspruch 13, worin die auf einen Gesamtgehalt der Mischung bezogene Menge 50 bis 600 ppm beträgt.

**15.** Verfahren nach Anspruch 1, worin der Radikalstarter eine Azo-Verbindung ist.

**16.** Verfahren nach Anspruch 15, worin die Azo-Verbindung mindestens eine Komponente ist, die aus der Gruppe ausgewählt wird, die aus 2,2'-Azo-bis-isobutyronitril und 2,2'-Azo-bis-(2,4-dimethylvaleronitril) besteht.

**17.** Verfahren nach Anspruch 1, worin der Radikalstarter eine Peroxyverbindung ist.

**18.** Verfahren nach Anspruch 17, worin die Peroxyverbindung mindestens eine Komponente ist, die aus der Gruppe ausgewählt wird, die aus Peroxydicarbonaten, Dialkylperoxiden, Hydroperoxiden und Peroxyketalen besteht.

**19.** Verfahren nach Anspruch 9, worin der Radikalstarter mindestens eine Komponente ist, die aus der Gruppe ausgewählt wird, die aus Ethyl-3,3-di(t-butylperoxy)butyrat und 1,1-di(t-butylperoxy)cyclohexan besteht.

**20.** Verfahren nach Anspruch 1, das umfaßt:
- Herstellung der Mischung in einem ersten kontinuierlich gerührten Mischreaktor;
- Halten des ersten kontinuierlich gerührten Mischreaktors bei einer Temperatur, bei der der Radikalstarter zerfällt, wobei beim Zerfall des Radikalstarters mindestens ein Startradikal und nicht-saure Zerfallsnebenprodukte entstehen;
- Polymerisation der ersten Mischung im ersten kontinuierlich gerührten Mischreaktor bis zu einem Punkt unterhalb eines Inversionspunkts der ersten Mischung, wobei die Polymerisation durch eine Reaktion des Startradikals mit dem vinylaromatischen Monomer gestartet wird;
- Einbringen der ersten Mischung in einen zweiten kontinuierlich gerührten Mischreaktor;
- Polymerisation der ersten Mischung im zweiten kontinuierlich gerührten Mischreaktor bis zu einem Punkt oberhalb des Inversionspunkts der ersten Mischung, um eine zweite Mischung herzustellen;
- Einbringen der zweiten Mischung in eine Reihe von mindestens zwei linearen Durchflußreaktoren, um die zweite Mischung weiter zu polymerisieren und eine dritte Mischung zu erzeugen, worin der Polymerisationsgrad der zweiten Mischung in jedem der linearen Durchflußreaktoren ansteigt; und
- Einbringen der dritten Mischung in den Vorerhitzer.

**21.** Verfahren nach Anspruch 1, worin der gereinigte Kreislaufstrom weniger als 40 ppm Gesamtverunreinigungen enthält.

**22.** Verfahren nach Anspruch 1, das weiterhin die Kontrolle des Säuregehalts des Kreislaufstroms umfaßt.

**23.** Verfahren nach Anspruch 22, worin der Säuregehalt des gereinigten Kreislaufstroms durch einen Säurezahltest kontrolliert wird.

**24.** Verfahren nach Anspruch 23, worin der Kreislaufstrom auf einer Säurezahl von weniger als ungefähr 0,08 gehalten wird.

**25.** Verfahren nach Anspruch 24, worin der Kreislaufstrom auf einer Säurezahl von weniger als ungefähr 0,03 gehalten wird.

**26.** Verfahren nach Anspruch 25, worin der Kreislaufstrom auf einer Säurezahl von weniger als ungefähr 0,01 gehalten wird.

**27.** Verfahren nach Anspruch 1, worin der Kreislaufstrom weniger als 0,03% der sauren Nebenproduktbestandteile enthält.

**28.** Verfahren nach Anspruch 27, worin der Kreislaufstrom weniger als 0,01% der sauren Nebenproduktbestandteile enthält.

**29.** Verfahren nach Anspruch 1, das umfaßt:
- Herstellung der Mischung in einem ersten kontinuierlich gerührten Mischreaktor;

- Polymerisation der ersten Mischung im ersten kontinuierlich gerührten Mischreaktor bis zu einem Punkt unterhalb eines Inversionspunkts der ersten Mischung;
- Einbringen der ersten Mischung in einen zweiten kontinuierlich gerührten Mischreaktor;
- Polymerisation der ersten Mischung im zweiten kontinuierlich gerührten Mischreaktor bis zu einem Punkt oberhalb des Inversionspunkts der ersten Mischung, um eine zweite Mischung herzustellen;
- Einbringen der zweiten Mischung in mindestens einen linearen Durchflußreaktor, um die zweite Mischung weiter zu polymerisieren und eine dritte Mischung herzustellen, worin der Polymerisationsgrad der zweiten Mischung in jedem der linearen Durchflußreaktoren ansteigt;
- Einbringen der dritten Mischung in den Vorerhitzer;
- Einbringen der flüchtigen Komponenten als Kreislaufstrom in einen Kreislauf-Reinigungsbehälter; und
- Entfernen von den Starter hemmenden Verunreinigungen aus dem Kreislaufstrom im Kreislauf-Reinigungsbehälter.

**30.** Verfahren nach Anspruch 29, worin mindestens ein linearer Durchflußreaktor eine Reihe von mindestens zwei linearen Durchflußreaktoren umfaßt.

**Revendications**

**1.** Procédé continu pour la production de polystyrène résistant au choc (high impact polystyrene) comprenant:
- la formation d'un mélange comprenant au moins un monomère vinylaromatique, un caoutchouc, un antioxydant non volatil, et un initiateur de radicaux libres;
- la polymérisation du dit mélange dans au moins un réacteur de polymérisation;
- l'alimentation du dit mélange dans un pré-chauffeur pour chauffer le dit mélange et produire un mélange chaud;
- l'alimentation du dit mélange chauffé dans un dévolatilisateur pour écarter les composés volatile du dit mélange chaud en produisant ainsi du polystyrène résistant au choc (high impact polystyrene); et
- l'alimentation des dits composés volatile dans un flux de recyclage vers au moins un réacteur de polymérisation;

et caractérisé en plus par un ou plusieurs des points suivants:

(i) le choix du dit antioxydant non volatil de façon à limiter la perte de poids, à 250 °C et sous une pression d'azote de une atmosphère, à moins de 1%;

(ii) le choix du dit initiateur de radicaux libres de façon à ce qu'il se décompose pour former ou moins un radical initiateur et pour l'essentiel uniquement des sous-produits de décomposition non-acides et compris dans les composés volatils retirés du dévolatilisateur; le choix du dit initiateur de radicaux libres de façon à ce que l'introduction des dits sous-produits de décomposition non-acides dans le flux de recyclage du premier réacteur n'inhibe pas la polymérisation du dit monomère vinylaromatique, et de sorte que la réaction entre les dits sous-produits de décomposition non-acides et de l'initiateur de radicaux libres n'inhibe pas la polymérisation du dit monomère vinylaromatique;

(iii) l'élimination des impuretés susceptibles d'inhiber l'initiateur se trouvant dans le dit flux de recyclage de façon à produire un flux de recyclage traité contenant moins de 0,08 % en poids de composés acides et l'alimentation du dit flux de recyclage traité dans au moins un des réacteurs de polymérisation.

**2.** Procédé selon la revendication 1 où la dite perte de poids est inférieure à 0,1%

**3.** Procédé selon la revendication 1 comprenant en plus les étapes suivantes:
- la polymérisation du dit mélange de monomère vinylaromatique et de caoutchouc dans un premier réacteur de polymérisation jusqu'à un degré supérieur au point d'inversion du dit mélange; et
- l'alimentation du dit mélange dans au moins un deuxième réacteur de polymérisation afin de pousser plus avant la polymérisation du dit mélange avant l'alimentation du dit mélange dans le dit pré-chauffeur.

4. Procédé selon la revendication 3 dans lequel le dit premier réacteur de polymérisation est un réservoir réacteur agité an continu.

5. Procédé selon la revendication 4 dans lequel le dit deuxième réacteur de polymérisation est un réacteur à flux linéaire.

6. Procédé selon la revendication 5 comprenant en plus une étape d'alimentation du dit mélange dans au moins un réacteur à flux linéaire supplémentaire avant le chauffage du dit mélange dans le dit pré-chauffeur.

7. Procédé selon la revendication 1 dans lequel le dit antioxydant non-volatil comprend au moins un des membres du groupe comprenant le 2,4-bis(n-octylthio)-6-(4-hydroxy-3,5-di-tert-butylanilino)-1,3,5-triazine et le triéhtylène glycol-bis(3-(3'-tert-butyl-4'-hydroxy-5'-méthylphényl)propionate).

8. Procédé selon la revendication 1 dans lequel le dit antioxydant non-volatil comprend l'octadécyl-3,5-di-tert-butyl-4-hydroxyhydro-cinnamate.

9. Procédé selon la revendication 2 comprenant:
- la formation du dit mélange dans un premier réservoir réacteur agité en continu;
- la polymérisation du dit premier mélange dans le dit premier réservoir réacteur agité en continu jusqu'à un point en dessous du point d'inversion du premier mélange;
- l'alimentation du dit premier mélange dans un deuxième réservoir réacteur agité en continu;
- la polymérisation du dit premier mélange dans le dit deuxième réservoir réacteur agité en continu jusqu'à un point au dessus du point d'inversion du premier mélange;
- l'alimentation du dit premier mélange dans une série d'au moins deux réacteurs flux linéaire pour une polymérisation plus poussée du dit premier mélange et la production un deuxième mélange, dans lequel le degré de polymérisation du premier mélange augmente dans chacun de ces dits réacteurs à flux linéaire; et
- l'alimentation du dit deuxième mélange dans le dit pré-chauffeur.

10. Procédé selon la revendication 9 dans lequel le dit premier réacteur de polymérisation est un réservoir réacteur agité en continu.

11. Procédé selon la revendication 10 dans lequel le dit second réacteur de polymérisation est un réacteur à flux linéaire.

12. Procédé selon la revendication 11 comprenant en plus une étape d'alimentation du dit mélange dans au moins un réacteur à flux linéaire supplémentaire avant le chauffage du dit mélange dans le dit préchauffeur.

13. Procédé selon la revendication 1 dans lequel le dit initiateur de radicaux libres est ajouté au dit mélange à raison de 10-2000 ppm par rapport au contenu total du dit mélange.

14. Procédé selon la revendication 13 dans lequel le dite quantité est de 50-600 ppm par rapport au contenu total du dit mélange.

15. Procédé selon la revendication 1 dans lequel le dit initiateur de radicaux libres est un composé azo.

16. Procédé selon la revendication 15 dans lequel le dit composé azo est au moins un des membres du groupe comprenant le 2,2'-azo-bis-isobutyronitrile et le 2,2'-azo-bis-(2,4-diméthyl valero-nitrile).

17. Procédé selon la revendication 1 dans lequel le dit initiateur de radicaux libres est un composé peroxy.

18. Procédé selon le revendication 17 dans lequel le dit composé peroxy est au moins un des membres du groupe comprenant les peroxydicarbonates, les dialkyl peroxydes, les hydroperoxydes et peroxycétals.

19. Procédé selon la revendication 9 dans lequel le dit initiateur de radicaux libres est au moins un des membres du groupe comprenant l'éthyl-3,3-di(t-butylperoxy)butyrate et le 1,1-di(t-butylperoxy)-

cyclohexane.

**20.** Procédé selon le revendication 1 comprenant:
- la formation du dit mélange dans un premier réservoir réacteur agité en continu;
- le maintien du dit premier réservoir réacteur agité en continu, à une température à laquelle le dit initiateur de radicaux libres se décompose pour former au moins un radical initiateur et des sous-produits de décomposition non acides;
- la polymérisation du dit premier mélange dans le dit premier réservoir réacteur agité en continu jusqu'à un point en dessous du point d'inversion du premier mélange, la dite polymérisation étant amorcée par une réaction entre le dit radical initiateur et le dit monomère vinyl aromatique;
- l'alimentation du dit premier mélange dans un deuxième réservoir réacteur agité en continu;
- la polymérisation du dit premier mélange dans le dit deuxième réservoir réacteur agité en continu jusqu'à un point au dessus du point d'inversion du premier mélange pour produire un second mélange;
- l'alimentation du dit second mélange dans une série d'au moins deux réacteurs à flux linéaire pour une polymérisation plus poussée du dit second mélange et produire un troisième mélange, dans lequel le degré de polymérisation du second mélange augmente dans chacun de ces dits réacteurs à flux linéaire; et
- l'alimentation du dit troisième mélange dans le dit pré-chauffeur.

**21.** Procédé selon la revendication 1 dans lequel le dit flux de recyclage traité contient moins de 40 ppm d'impuretés totales.

**22.** Procédé selon la revendication 1 comprenant en plus une surveillance du contenu acide du dit flux de recyclage traité.

**23.** Procédé selon la revendication 22 dans lequel le contenu acide du flux de recyclage traité est surveillé par le test du nombre acide.

**24.** Procédé selon la revendication 23 dans lequel le dit flux de recyclage est maintenu à un niveau correspondant à un nombre acide inférieur à environ 0,08.

**25.** Procédé selon la revendication 24 dans lequel le dit flux de recyclage est maintenu à un niveau correspondant à un nombre acide inférieur à environ 0,03.

**26.** Procédé selon la revendication 25 dans lequel le dit flux de recyclage est maintenu à un niveau correspondant à un nombre acide inférieur à environ 0,01.

**27.** Procédé selon la revendication 1 dans lequel le dit flux de recyclage contient moins de 0,03% des dits sous-produits de composante acide.

**28.** Procédé selon la revendication 27 dans lequel le dit flux de recyclage contient moins de 0,01% des dits sous-produits de composante acide.

**29.** Procédé selon la revendication 1 comprenant :
- la formation du dit mélange dans un premier réservoir réacteur agité en continu;
- la polymérisation du dit premier mélange dans le dit premier réservoir réacteur agité en continu jusqu'à un point en dessous du point d'inversion du premier mélange;
- l'alimentation du dit premier mélange dans un deuxième réservoir réacteur agité en continu;
- la polymérisation du dit premier mélange dans le dit deuxième réservoir réacteur agité en continu jusqu' à un point au dessus du point d'inversion du premier mélange pour produire un second mélange;
- l'alimentation du dit second mélange dans ou moins un réacteur à flux linéaire pour une polymérisation plus poussée du dit second mélange et produire un troisième mélange, dans lequel le degré de polymérisation du second mélange augmente dans chacun de ces dits réacteurs à flux linéaire;
- l'alimentation du dit troisième mélange dans le dit pré-chauffeur.

- l'alimentation des dits composés volatils en tant que flux de recyclage dans le dit réservoir de traitement du flux de recyclage; et
- l'élimination des impuretés inhibant l'initiateur du dit flux de recyclage dans le dit réservoir de traitement du flux de recyclage.

**30.** Procédé selon la revendication 29 dans lequel la dite partie comprenant au moins un réacteur à flux linéaire comprend une série d'au moins deux réacteurs à flux linéaire.

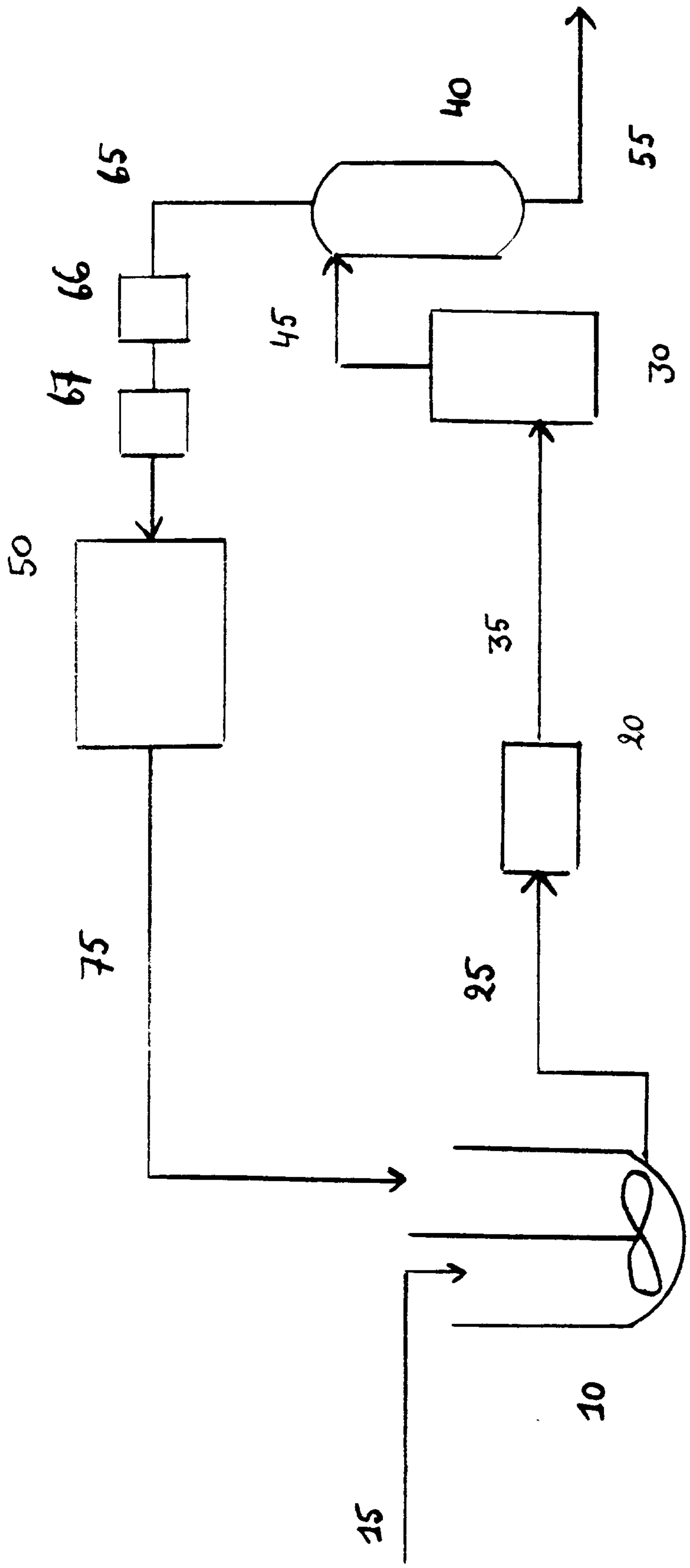


Fig 1

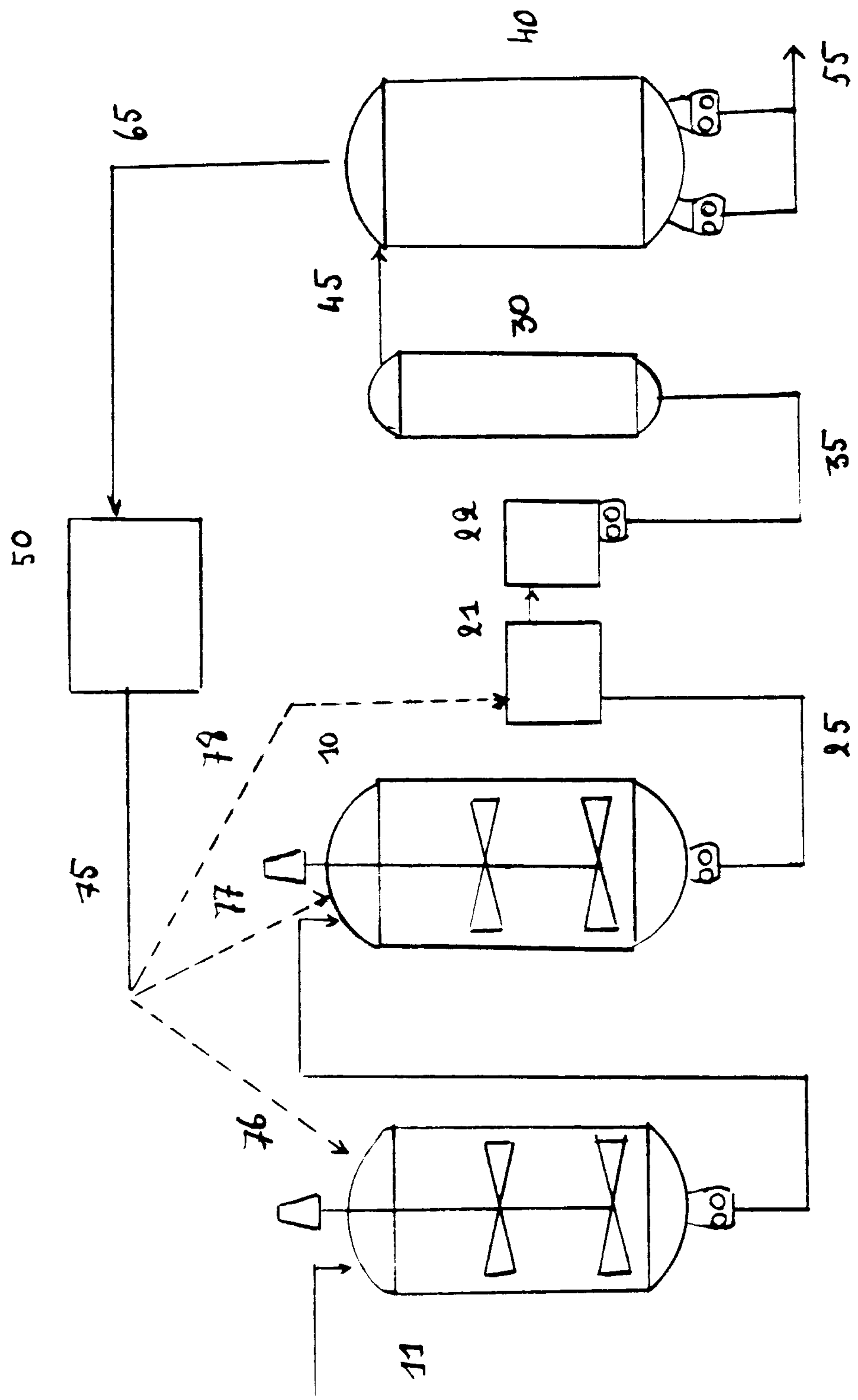


Fig 2

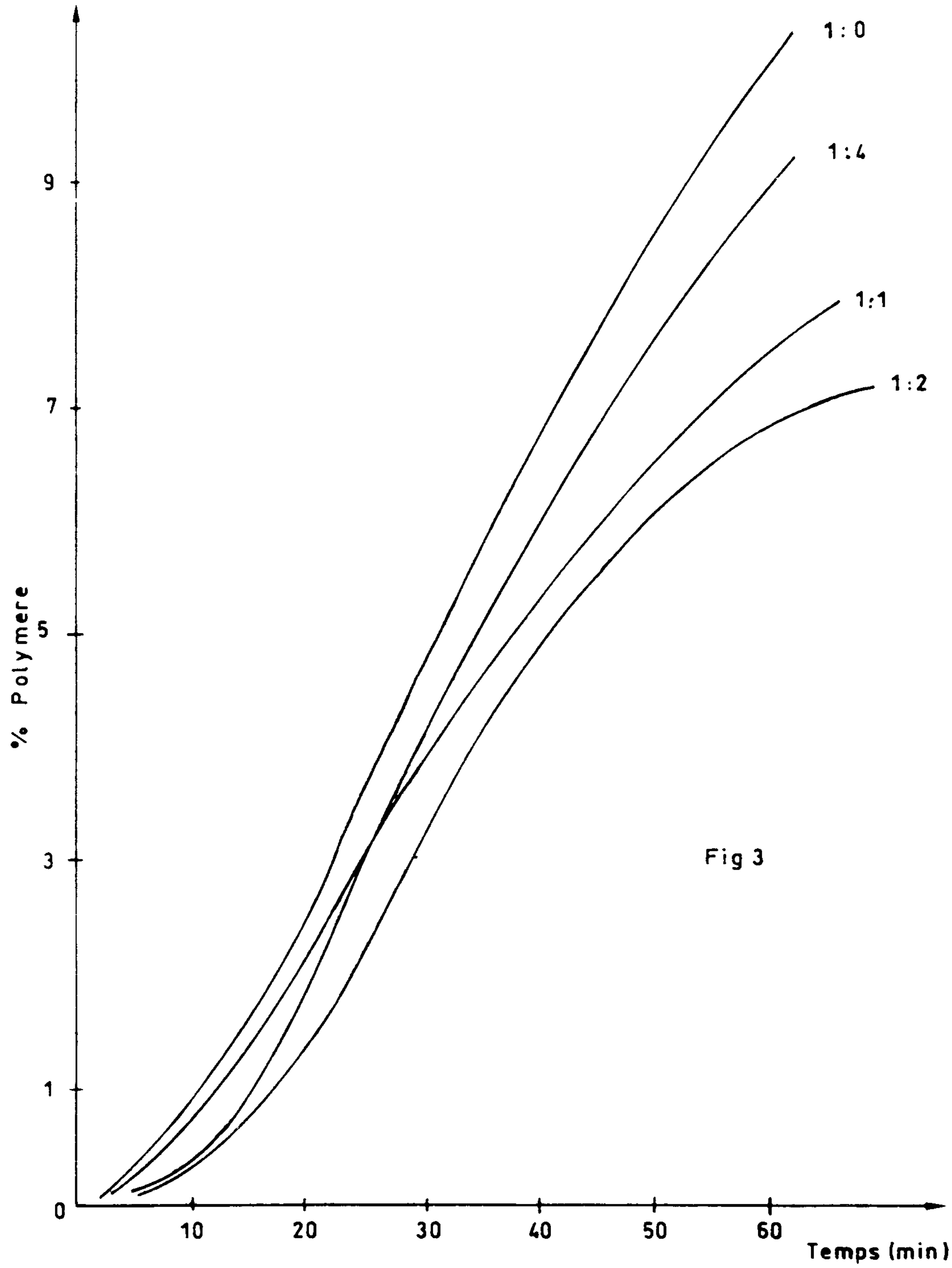


Fig 3

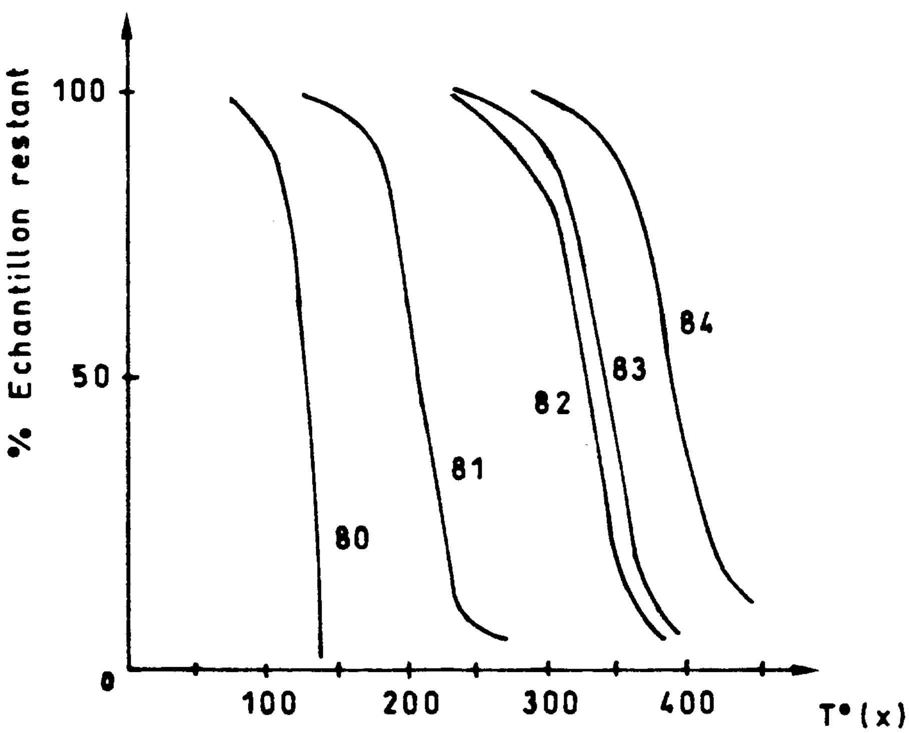


FIG 4